# EUROPEAN PATENT SPECIFICATION

(11) **EP 3 853 022 B1**
(45) Date of publication and mention of the grant of the patent: **27.08.2025**
(21) Application number: 19861582.5
(22) Date of filing: 20.09.2019
(51) Int. Cl.: B33Y 10/00, B33Y 30/00, B33Y 70/00, B05B 5/025, B05B 5/16, B22F 10/22, B22F 10/30, B22F 12/53, B33Y 50/02, B41J 2/00, H05K 3/00

(54) **PULSE SHAPING TECHNIQUES TO IMPROVE MAGNETOHYDRODYNAMIC PRINTING PERFORMANCE**
PULSFORMUNGSTECHNIKEN ZUR VERBESSERUNG DER MAGNETOHYDRODYNAMISCHEN DRUCKLEISTUNG
TECHNIQUES DE MISE EN FORME D'IMPULSIONS POUR AMÉLIORER LES PERFORMANCES D'IMPRESSION MAGNÉTOHYDRODYNAMIQUE

(30) Priority: 20.09.2018 US 201862733994 P; 08.04.2019 US 201962830805 P; 26.04.2019 US 201962839014 P
(43) Date of publication of application: 28.07.2021
(73) Proprietor: Desktop Metal, Inc., Burlington, MA 01803 (US)
(72) Inventor: GIBSON, Mark Gardner, Burlington, MA 01803 (US); SACHS, Emanuel Michael, Burlington, MA 01803 (US)
(74) Representative: Viering, Jentschura & Partner mbB Patent- und Rechtsanwälte
(86) International application number: PCT/US2019/052294
(87) International publication number: WO 2020/061542

(56) References cited:
- WO-A1-2017/152133
- US-A1- 2014 217 134
- US-A1- 2017 252 822
- US-A1- 2017 252 830
- US-A1- 2017 252 830

## Description

### FIELD OF THE DISCLOSURE

The subject matter of the present disclosure generally relates to the fabrication of metal parts by additive manufacturing using magnetohydrodynamic (MHD) printing of molten metal, and more particularly relates to pulse shaping techniques for the same.

### BACKGROUND OF THE DISCLOSURE

Metal parts may be additively manufactured using MHD printing of molten metal. Such additive manufacturing is described in U.S. Patent No. 10,201,854 entitled "Magnetohydrodynamic Deposition of Metal in Manufacturing" and filed March 6, 2017.

In jetting of liquid metal by magnetohydrodynamic (MHD) principles, the pressure to expel the liquid metal is created by Lorentz forces resulting from the interaction of a magnetic field and an electrical current.

In certain additive manufacturing systems using MHD printing of liquid metal, a fluid chamber contains liquid metal and a magnetohydrodynamic force is created in the liquid metal, causing a drop or stream of liquid metal to be expelled from a discharge orifice of a nozzle. This may be accomplished in a continuous stream, segments of continuous stream or a series of droplets. The nozzle is moved relative to a build plate on which the successive layers are deposited, thereby forming a three-dimensional shape.

Jetting techniques can be divided into so-called "continuous jetting" and "drop-on-demand". In continuous jetting, a continuous stream of liquid is issued from the nozzle. This stream may or may not break into droplets before reaching a target via Raleigh breakup. In "drop-on-demand" jetting, drops are issued individually from the nozzle orifice. In one form of drop-on-demand MHD jetting (distinguished from continuous jetting), the magnetic field is held constant while the electric current is varied and/or pulsed to produce droplets. However, the nozzle may fail to produce droplets of a desired speed, size, trajectory, and frequency, or may do so inconsistently, due to factors including inertance in the nozzle throat, unwanted resonance of the liquid inside the nozzle or the nozzle assembly itself, and oscillation of the meniscus of liquid metal at the outlet of the nozzle orifice after a droplet is ejected. While some of these factors may be partially addressed by improvements in nozzle design, there is nonetheless a desire to further increase nozzle performance in the areas mentioned above. Related prior art comprises WO 2017/152133 A1 and US 2017/252830 A1.

The subject matter of the present disclosure is directed to overcoming, or at least reducing the effects of, one or more of the problems set forth above.

### BRIEF SUMMARY OF THE DISCLOSURE

Disclosed is an additive manufacturing system using MHD printing of molten metal and methods for operating the same. In an embodiment, a first current pulse is applied to a liquid metal in a nozzle to eject a droplet from a discharge orifice. A second current pulse is applied to the liquid metal in the nozzle to reduce an amplitude of the oscillations in a meniscus on the discharge orifice. The second current pulse can be either of an opposite or the same polarity as the first current pulse. The strength of the current pulses relative to one another is controlled, either by varying the current of the pulses or duration thereof.

Beneficially, the meniscus of liquid metal formed at the discharge orifice can be controlled. In certain embodiments, this allows the length of a ligament and the resultant snap-back force to be reduced. This may also allow the nozzle to jet liquid metal closer to the surface being built, which increases the tolerances of angle deviation that can be permitted among other advantages. Satellites, or errant additional droplets, may be caused to merge with intended droplets to reduce printing defects.

### BRIEF DESCRIPTION OF THE DRAWINGS

The foregoing summary, preferred embodiments, and other aspects of the present disclosure will be best understood with reference to a detailed description of specific embodiments, which follows, when read in conjunction with the accompanying drawings, in which:
Fig. 1 is a block diagram of an additive manufacturing system for MHD printing molten metal.
Figs. 2A-C are depictions of the nozzle of the system of Fig. 1.
Figs 3A-D depict the formation and ejection of a droplet during MHD printing of molten metal.
Figs. 4A-B depicts the formation of a ligament and satellite conditions during MHD printing of molten metal.
Fig. 5 depicts a flow chart of an embodiment method.
Figs. 6A-B depicts the amelioration of ligament and satellites through the use of a secondary pulse.
Figure 7 depicts a block diagram of a method for controlling droplet speed using pulse duration.
Figure 8 depicts an embodiment plot of current over time for streaming including a positive starting pulse, constant streaming current and negative stopping pulse.
Figure 9 depicts an embodiment plot of jetting current and meniscus position over time, showing natural decay of meniscus oscillation.
Figure 10 depicts a plot of jetting current and meniscus position over time, showing reduced amplitude of meniscus oscillation after application of negative stabilizing pulse at a zero-crossing point.
Figure 11 depicts a plot of jetting current and meniscus position over time, showing reduced amplitude of meniscus oscillation after application of positive stabilizing pulse at a zero-crossing point.

Like reference numbers and designations in the various drawings indicate like elements.

### DETAILED DESCRIPTION

Disclosed is a method for the manipulation of the jetting current in the MHD printing of molten metal in additive manufacture of metal parts to improve jetting performance. Several techniques are disclosed, which may be used singly or in combination.

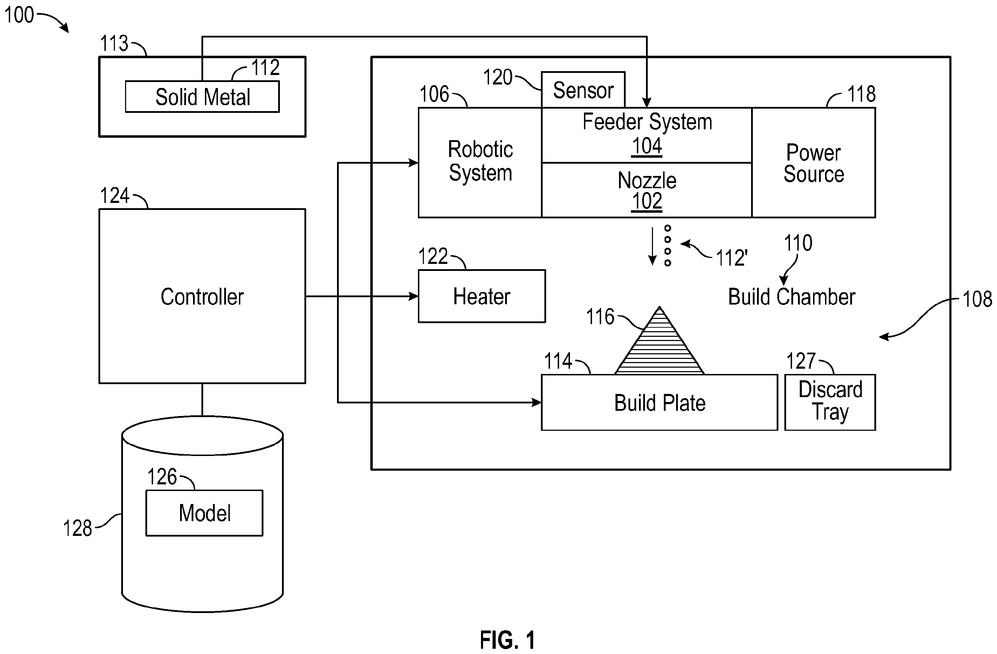

Figure 1 is a schematic depiction of an additive manufacturing system 100 using MHD printing of liquid metal 100 in which the disclosed improvements may be employed. Additive manufacturing system 100 can include a nozzle 102, a feeder system 104, and a robotic system 106. In general, the robotic system 106 can move the nozzle 102 along a controlled pattern within a working volume 108 of a build chamber 110 as the feeder system 104 moves a solid metal 112 from a metal supply 113 and into the nozzle 102. As described in greater detail below, the solid metal 112 can be melted via heater 122 in or adjacent to the nozzle 102 to form a liquid metal 112' and, through a combination of a magnetic field and an electric current acting on the liquid metal 112' in the nozzle 102, MHD forces can eject the liquid metal 112' from the nozzle 102 in a direction toward a build plate 114 disposed within the build chamber 110. Through repeated ejection of the liquid metal 112' as the nozzle 102 moves along the controlled pattern, an object 116 (e.g., a two-dimensional object or a three-dimensional object) can be formed. The object may be formed based on a model 126 enacted through a controller 124. In certain embodiments, the object 116 can be moved under the nozzle 102 (e.g., as the nozzle 102 remains stationary). For example, in instances in which the controlled pattern is a three-dimensional pattern, the liquid metal 112' can be ejected from the nozzle 102 in successive layers to form the object 116 through additive manufacturing. Thus, in general, the feeder system 104 can continuously, or substantially continuously, provide build material to the nozzle 102 as the nozzle 102 ejects the liquid metal 112', which can facilitate the use of the three-dimensional printer 100 in a variety of manufacturing applications, including high volume manufacturing of metal parts. As also described in greater detail below, MHD forces can be controlled in the nozzle 102 to provide drop-on-demand delivery of the liquid metal 112' at rates ranging from about one liquid metal drop per hour to thousands of liquid metal drops per second and, in certain instances, to deliver a substantially continuous stream of the liquid metal 112'. A sensor or sensors 120 may monitor the printing process as discussed further below.

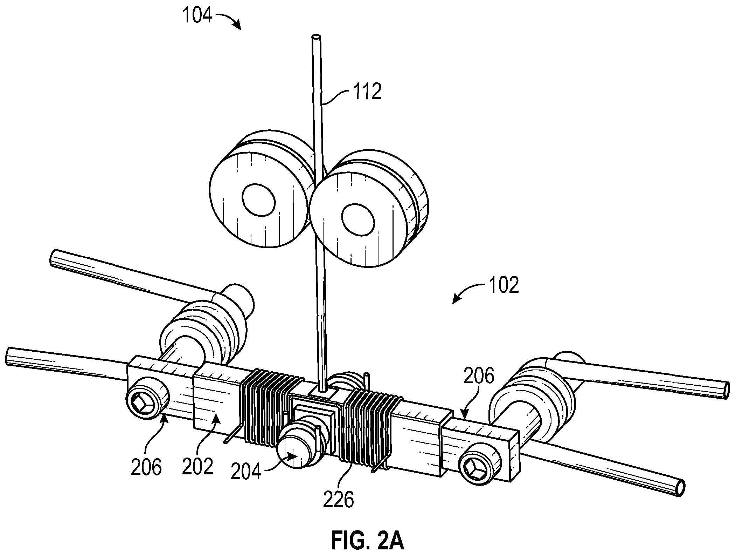

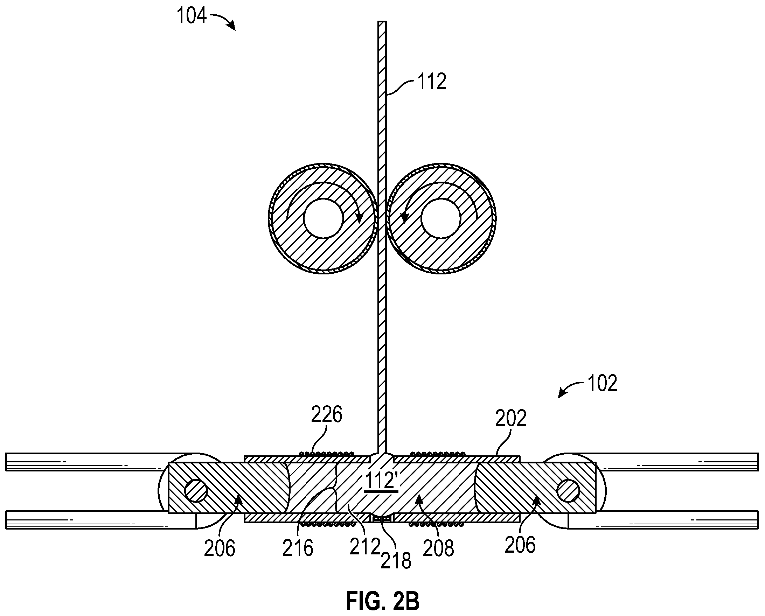

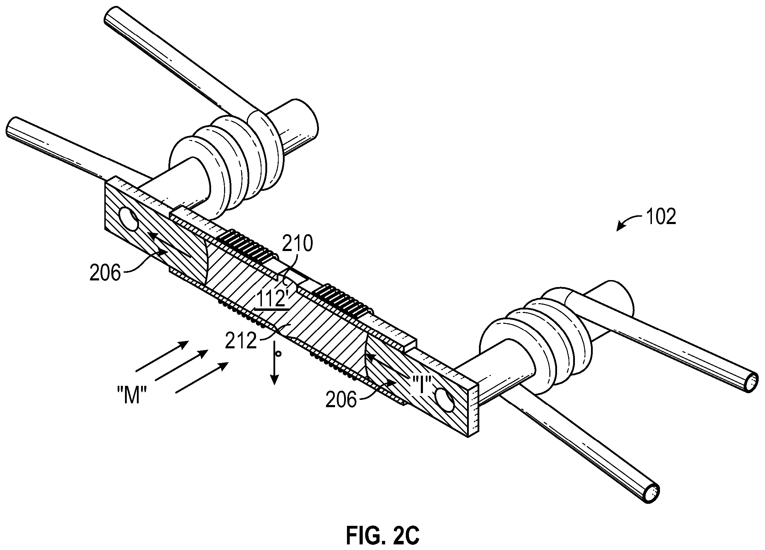

Now with reference to Figures 2A-D which depict the nozzle of the printer of Figure 1. The nozzle can include a housing 202, one or more magnets 204, and electrodes 206. The housing 202 can define at least a portion of a fluid chamber 208 having an inlet region 210 and a discharge region 212. The one or more magnets 204 can be supported on the housing 202 or otherwise in a fixed position relative to the housing 202 with a magnetic field "M" generated by the one or more magnets 204 directed through the housing 202. In particular, the magnetic field can be directed through the housing 202 in a direction intersecting the liquid metal 112' as the liquid metal 112' moves from the inlet region 210 to the discharge region 212. Also, or instead, the electrodes 206 can be supported on the housing 202 to define at least a portion of a firing chamber 216 within the fluid chamber 208, between the inlet region 210 and the discharge region 212. In use, the feeder system 104 can engage the solid metal 112 and, additionally or alternatively, can direct the solid metal 112 into the inlet region 210 of the fluid chamber 208 as the liquid metal 112' is ejected through the discharge orifice 218 through MHD forces generated using the one or more magnets 204 and the electrodes 206. A heater 226 may be employed to heat the housing 202 and the fluid chamber 208 to melt the solid metal 112. A discard tray 127 is located in proximity to the build plate and the nozzle may deposit droplets in it during a testing or calibration step.

In certain implementations, an electric power source 118 can be in electrical communication with the electrodes 206 and can be controlled to produce an electric current "I" flowing between the electrodes 206. In particular, the electric current "I" can intersect the magnetic field "M" in the liquid metal 112' in the firing chamber 216. It should be understood that the result of this intersection is an MHD force (also known as a Lorentz force) on the liquid metal 112' at the intersection of the magnetic field "M" and the electric current "I". Because the direction of the MHD force obeys the right-hand rule, the one or more magnets 204 and the electrodes 206 can be oriented relative to one another to exert the MHD force on the liquid metal 112' in a predictable direction, such as a direction that can move the liquid metal 112' toward the discharge region 212. The MHD force on the liquid metal 112' is of the type known as a body force, as it acts in a distributed manner on the liquid metal 112' wherever both the electric current "I" is flowing and the magnetic field "M" is present. The aggregation of this body force creates a pressure which can lead to ejection of the liquid metal 112'. It should be appreciated that orienting the magnetic field "M" and the electric current substantially perpendicular to one another and substantially perpendicular to a direction of travel of the liquid metal 112' from the inlet region 210 to the discharge region 212 can result in the most efficient use of the electric current "I" to eject the liquid metal 112' through the use of MHD force.

In use, the electrical power source 118 can be controlled to pulse the electric current "I" flowing between the electrodes 206. The pulsation can produce a corresponding pulsation in the MHD force applied to the liquid metal 112' in the firing chamber 216. If the impulse of the pulsation is sufficient, the pulsation of the MHD force on the liquid metal 112' in the firing chamber 208 can eject a corresponding droplet from the discharge region 212.

In certain implementations, the pulsed electric current "I" can be driven in a manner to control the shape of a droplet of the liquid metal 112' exiting the nozzle 102. In particular, because the electric current "I" interacts with the magnetic field "M" according to the right-hand rule, a change in direction (polarity) of the electric current "I" across the firing chamber 216 can change the direction of the MHD force on the liquid metal 112' along an axis extending between the inlet region 210 and the discharge region 212. Thus, for example, by reversing the polarity of the electric current "I" relative to the polarity associated with ejection of the liquid metal 112', the electric current "I" can exert a pullback force on the liquid metal 112' in the fluid chamber 208.

Each pulse can be shaped with a pre-charge that applies a small, pullback force (opposite the direction of ejection of the liquid metal 112' from the discharge region 212) before creating an ejection drive signal to propel one or more droplets of the liquid metal 112' from the nozzle 102. In response to this pre-charge, the liquid metal 112' can be drawn up slightly with respect to the discharge region 212. Drawing the liquid metal 112' slightly up toward the discharge orifice in this way can provide numerous advantageous, including providing a path in which a bolus of the liquid metal 112' can accelerate for cleaner separation from the discharge orifice as the bolus of the liquid metal is expelled from the discharge orifice, resulting in a droplet with a more well-behaved (e.g., stable) shape during travel. Similarly, the retracting motion can effectively spring load a forward surface of the liquid metal 112' by drawing against surface tension of the liquid metal 112' along the discharge region 212. As the liquid metal 112' is then subjected to an MHD force to eject the liquid metal 112', the forces of surface tension can help to accelerate the liquid metal 112' toward ejection from the discharge region 212.

Further, or instead, each pulse can be shaped to have a small pullback force following the end of the pulse. In such instances, because the pullback force is opposite a direction of travel of the liquid metal 112' being ejected from the discharge region 212, the small pullback force following the end of the pulse can facilitate clean separation of the liquid metal 112' along the discharge region 212 from an exiting droplet of the liquid metal 112'. Thus, in some implementations, the drive signal produced by the electrical power source 118 can include a wavelet with a pullback signal to pre-charge the liquid metal 112', an ejection signal to expel a droplet of the liquid metal, and a pullback signal to separate an exiting droplet of the liquid metal 112' from the liquid metal 112' along the discharge region 212. Additionally, or alternatively, the drive signal produced by the electrical power source 118 can include one or more dwells between portions of each pulse.

As used herein, the term "liquid metal" shall be understood to include metals and metal alloys in liquid form and, additionally or alternatively, includes any fluid containing metals and metal alloys in liquid form, unless otherwise specified or made clear by the context. Metals suitable for use with the disclosure include aluminum and aluminum alloys, copper and copper alloys, silver and silver alloys, gold and gold alloys, platinum and platinum alloys, iron and iron alloys, and nickel and nickel alloys.

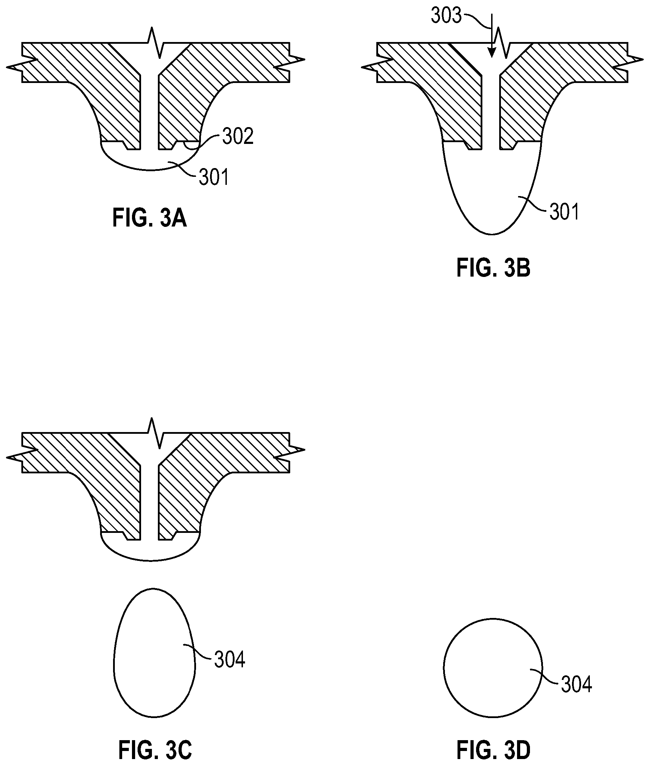

Figures 3A-3D depict the formation of a droplet during the MHD printing process. In Figure 3A, a meniscus 301 can be seen wetted to a nozzle stem face 302. In Figure 3B, an MHD force 303 acts to increase the size of the meniscus 301 to form a droplet. In Figure 3C, the droplet 304 can be seen having separated from the meniscus. Finally in Figure 3D the droplet 304 can be seen in flight towards a build plate or object being manufactured.

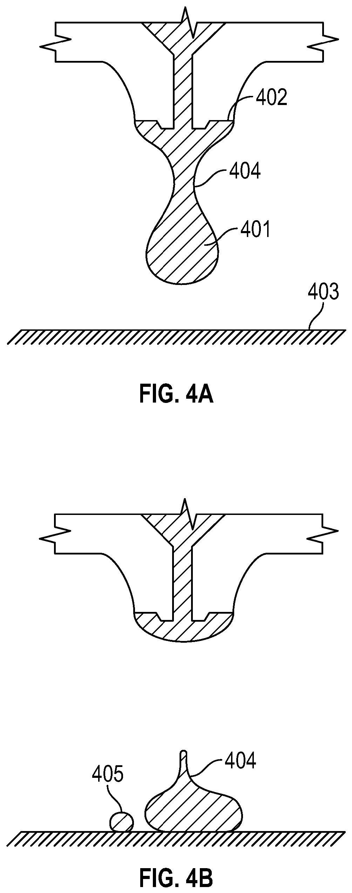

Figs. 4A-B depict conditions that can occur during MHD printing. A droplet 401 is ejected from nozzle 402 to build a layer upon object 403. However, a long ligament 404 can form behind droplet 401. If the droplet 401 contacts the object being printed before the ligament detaches from the meniscus, and has had sufficient time to coalesce with the droplet 401, it can freeze into a stalagmite-like feature. Such structures can severely disrupt the printing of subsequent layers and the achieved print quality. This can limit how close the nozzle can be to the build surface during printing because sufficient clearance must be made to accommodate such ligaments. Further, long ligaments may result in satellites 405 that can be flung to angles off of the intended jetting path, creating undesirable defects.

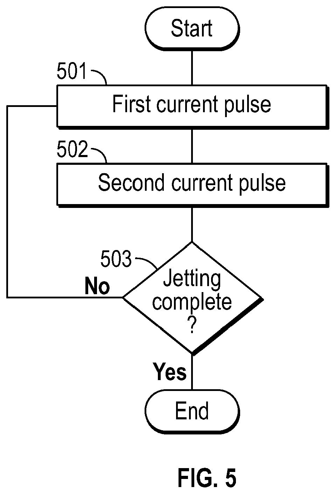

Now with reference to Figure 5, described is an embodiment method. In step 501, when printing, a first current pulse is passed through the liquid metal in the nozzle of the additive manufacturing system, ejecting a droplet of liquid metal. In step 502, a second current pulse is passed through the liquid metal in the nozzle, being one of a lower current or a lower duration. There is a time pause between the first current pulse and second current pulse. The second current pulse may be of the same polarity as the jetting pulse or may be of opposite plurality. In certain instances, both may be employed. The second pulse is timed so as to reduce the amplitude of the oscillations in the meniscus and/or assist in causing a ligament to detach from or be withdrawn into the meniscus. In step 503, if the jetting is not complete, that is subsequent additional jetting is desired, the steps of applying a first and second current pulse are repeated until jetting is no longer desired (i.e., the nozzle will be moved without jetting or the print is done, etc.).

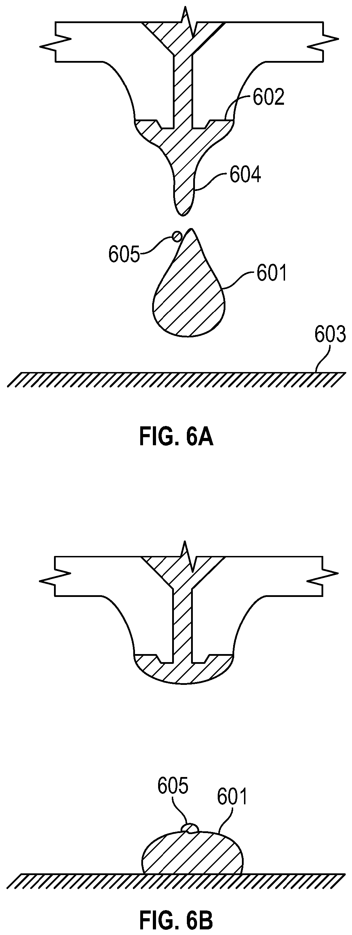

Figs. 6A-B depict the conditions of Figs. 4A-B as ameliorated through the use of a second negative pulse. Droplet 601 is again deposited from nozzle 602 to the build surface 603. The second negative pulse causes the ligament 604 to snap off earlier than it otherwise would, with part of the ligament 604 returning to and settling in the meniscus of molten metal normally residing on the face of the nozzle, and the other part of the ligament being incorporated into the droplet 601. Any satellites 605 formed tend to impact the top of the droplet 601 and form part of it.

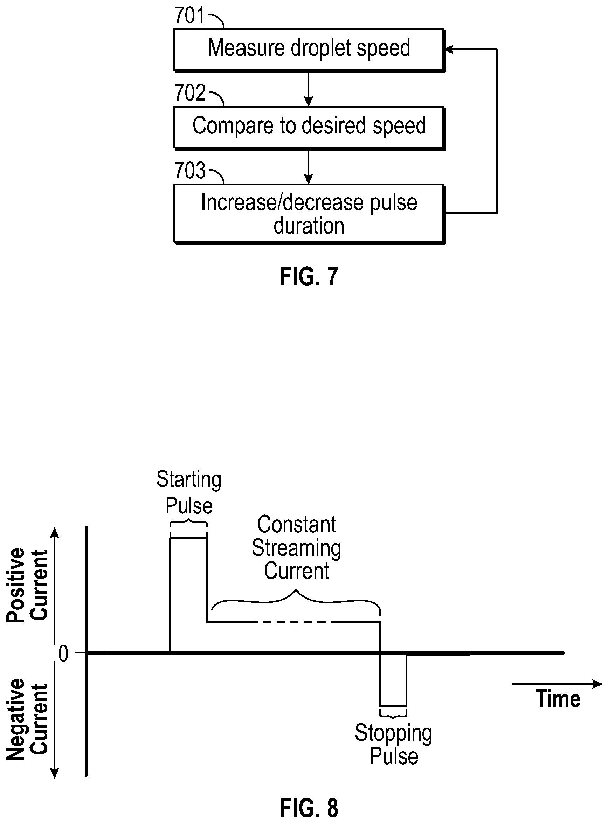

Figure 7 depicts a method of adjusting the droplet speed during MHD printing. In step 701, the speed of a droplet is measured during jetting. The measured speed is compared to a desired speed. If the speed needs to be increased, the jetting pulse duration may be increased. If the droplet speed needs to be decreased, the jetting pulse duration may be decreased. It may be desirable to increase the velocity of the ejected droplet. For example, faster drops will experience a smaller "flight time" between nozzle and substrate, which can reduce the opportunity for oxidation if the jetted material is a reactive metal such as aluminum. However, as jetting energy is increased to produce higher velocities, additional unwanted droplets (known as 'satellites' to the art) tend to be produced. These satellites can exit the nozzle in essentially random directions, delivering unwanted mateiral to the drop target. To increase the rate of material delivery, it may be desirable to increase the frequency of droplet ejection. In drop-on-demand jetting, this is nominally achieved simply by increasing the frequency of the pulses used to jet each droplet. However, the maximum usable frequency can be limited by residual vibration in the nozzle or of the meniscus after a drop is ejected.

The techniques described are generally suited for use in a system that has two independently adjustable power supplies and associated capacitor banks. The power supplies and banks are electrically oriented such that one is positive and one is negative, relative to a common ground potential. Switching devices such as metal-oxide-semiconductor field effect transistors (MOSFETs) or other devices and their associated drive circuitry are used to selectively apply positive or negative voltage to the output, thus causing a positive or negative current to flow through the load, which is the molten metal. In certain embodiments, a current-limiting resistor is added in series with the load to prevent excessive current flow while allowing full voltage to be applied at the beginning of the pulse, with the effect being a shortening of the rise time of the current pulse. The MOSFETs or other switching devices may be switched by a waveform generator or other pulse-generating circuitry. It will be understood by those in the art to which the present disclosure pertains that the techniques described are not limited to only the described electrical system.

There are certain methods to produce pulses. In certain embodiments, the impulse delivered to the liquid metal is adjusted by altering the voltage applied to the liquid metal during the jetting pulse, which in turn alters the current passing through it and thus the resulting Lorentz jetting force applied during the pulse.

In another embodiment, the duration of the jetting pulse is altered to adjust the impulse delivered to the liquid metal, and thus the speed of the resulting drops. Unlike the technique of altering the applied voltage, the pulse duration can be adjusted instantly, without for example requiring a change to power supply settings and the subsequent delay for the supply to stabilize at the new setting. In this way, the speed of each drop may be individually controlled. When combined with a means to measure drop speed, this technique can be used to maintain a constant drop speed despite changing nozzle conditions as shown in Figure 8.

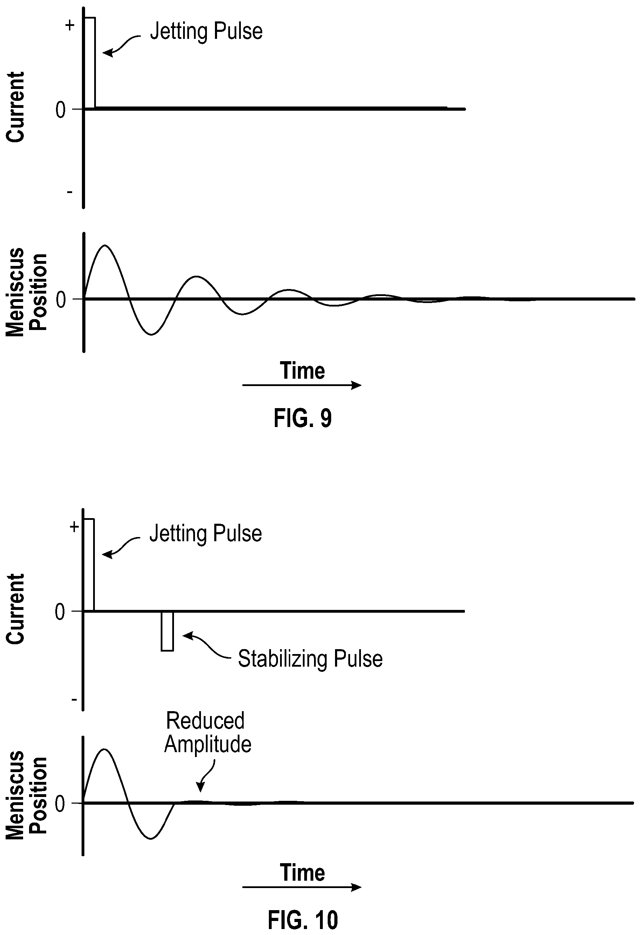

Figure 9 depicts the application of a jetting pulse and an associated meniscus position without the application of a second current pulse. As is apparent, the meniscus can continue to oscillate for a significant period of time, disrupting the ability to continue printing.

In certain embodiments, the "jetting pulse," that is a pulse that ejects a drop is preceeded by a pulse of the opposite electrical polarity as the jetting pulse (a "negative pulse"). Being of opposite polarity, the negative pulse tends to retract liquid (and thus the liquid meniscus) into the nozzle throat instead of ejecting it. The resultant drop size may be manipulated by adjusting the product of current and pulse duration, with larger values resulting in greater retraction of the meniscus and smaller drop sizes. In certain instances, drop volume reductions of up to 50% were observed. The amount of energy to be delivered by the pulse and the time between the negative pulse and the jetting pulse required to produce these effects depend on the properties of the liquid being jetted and the geometry of the nozzle. In one embodiment, the negative pulse is 75 µs in duration, at approximately 200A, while the positive pulse is 100 µs in duration, at approximately 700A, and a delay of 100 µs between the negative and positive pulses.

In another embodiment, the drop size can be increased by using a second negative pulse delivered after the positive pulse, which alters the timing of the droplet breakoff from the material ejected from the nozzle, creating a satellite droplet which eventually rejoins the main droplet, resulting in an overall increase in volume per drop. In this way, the same nozzle can deliver droplets of adjustable size.

In another embodiment, a positive pulse is delivered to begin material ejection. Soon after material begins exiting the nozzle, a substantially equal negative pulse is delivered, with several desirable effects. First, the breakoff from the nozzle surface occurs before the ligament can separate from the main drop, eliminating a satellite which would otherwise occur and thus allowing higher droplet velocities for a given nozzle and material. Second, the resulting higher-speed ligament and droplet reduce the influence of any wetted material on the face of the nozzle, and thus allow a given nozzle to shoot straighter, i.e. with a drop trajectory closer to the intended travel path along the axis of the orifice axis. Finally, the meniscus is disturbed less than with typical positive-only pulses, resulting in a faster vibration damping, thus enabling higher-frequency jetting.

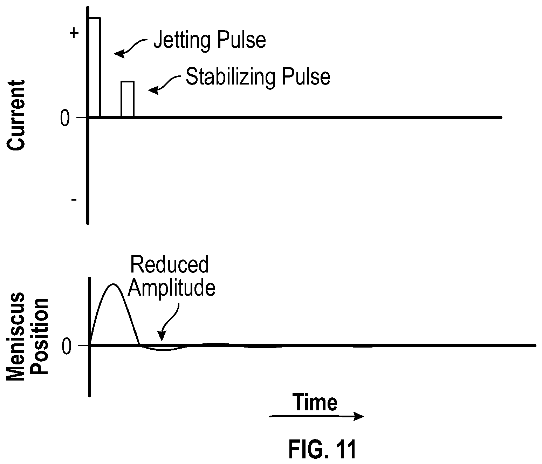

In another embodiment and with reference to Figure 10, oscillation in the meniscus after a drop is ejected is reduced by applying a negative "stabilizing pulse" after the drop is ejected, with the effect of removing energy from the oscillatory system formed by the mass of the liquid in the nozzle and the compliance of the meniscus at the nozzle exit. The pulse is applied at the zero-crossing point where the meniscus is about to transition from concave to convex. In an alternate embodiment, the negative pulse is replaced by a second positive pulse, applied at the zero-crossing point when the meniscus is about to transition from convex to concave, as shown in Figure 11. In one embodiment, multiple such pulses can be applied at sucessive zero-crossing points. A potential benefit of this is that the system stabilizes more quickly after a drop ejection, allowing another drop to be ejected more quickly, and thus the jetting frequency to be increased.

When a drop is ejected, a quantity of material exits the nozzle office at some velocity. This creates a so-called 'ligament' of material. Eventually, a droplet breaks off from the ligament, and the remaining material 'snaps back' toward the nozzle face. Since this material has kinetic energy, it will "splash" against the nozzle face, which can cause undesired conditions such as increased vibration or unwanted spreading of the material across the face. In another embodiment, a negative pulse immediately after the drop ejection is used to "absorb" this splashing material and draw it back into the nozzle orifice.

In another embodiment, applicable to continuous jetting, a positive pulse is used to initiate a constant stream (accomplished with a lower constant jetting current), and a negative pulse is used to cleanly turn off the constant stream, as shown in Figure 8.

In another embodiment, a negative bias current, applied constantly, is used to pull the meniscus back and hold it back in the quiescent state, to provide similar benefits to the negative pulse described above, and also to clear liquid from the face of the nozzle over time.

In another embodiment, positive pulses with energy higher than the normal jetting pulse are used to clean the throat or outlet of the nozzle. For example, a normal jetting pulse could be 700A for 100 µs, while the effective cleaning pulses for the same nozzle might be 10 pulses at 100 Hz, each pulse consisting of a 700A for 300 us.

Any electrical current passing through the molten metal, in addition to the Lorentz force described above, will also produce joule heating of the metal due to the resistance of the metal. This heating is proportional to the resistance, and to the square of current. Meanwhile, the impulse applied to the liquid for jetting is proportional to the current and the time such current is applied. Given that continuous heat input is required to keep most metals molten in an ambient-temperature environment, in certain embodiments, the amount of joule heating may be manipulated without affecting jetting impulse, by altering the amount of current applied and the duration of the jetting pulse, in inverse proportion. This may be done for jetting pulses, negative pulses, or both. Conversely, the jetting impulse may be manipulated without changing joule heating. Further, the average joule heating over time will be proportional to the jetting frequency. By using lower current and longer pulse duration, the average heat delivered could be held constant even as jetting frequency increases. In other embodiments, pulses whose product of current and time is insufficient to cause a drop to be ejected might be applied continuously between negative and jetting pulses. For example, a normal jetting pulse might be 700A for 100 µs, while heating pulses could be applied at 50A for 10 ms, or 700A for 10 µs, neither of which might be sufficient to eject droplets. Additionaly or alternately, pulses could be applied at a frequency considerably higher than the maximum frequency at which the drops can be ejected (due to mechanical inertance). For example, a nozzle might reliably eject droplets at a frequency of 0-200 Hz. If pulses were applied at 5kHz or higher, perhaps up to 10's or 100's of kHz, no drops would be ejected but heating would occur.

## Claims

1. A method for additively manufacturing metal parts using magnetohydrodynamic (MHD) printing of liquid metal, comprising the steps of:
ejecting a plurality of droplets of liquid metal from the discharge orifice (218) of a nozzle (102; 402; 602) to form successive layers of an object (116; 403);
the ejection of each droplet (112'; 304; 401; 601) includes applying a first current pulse to the liquid metal in the nozzle (102; 402; 602) sufficient to eject the droplet (112'; 304; 401; 601);
**characterised by** applying a second current pulse to the liquid metal in the nozzle (102; 402; 602) thereby reducing an amplitude of an oscillation in the meniscus (301).

2. The method of claim 1 wherein the first current pulse and the second current pulse are of opposite polarities.

3. The method of claim 1 wherein the first current pulse and the second current pulse are of the same polarity.

## Patentansprüche

1. Verfahren zur additiven Fertigung von Metallteilen mittels magnetohydrodynamischen (MHD) Druckens von flüssigem Metall, das die folgenden Schritte aufweist:
Ausstoßen einer Mehrzahl von Tropfen flüssigen Metalls aus der Austrittsöffnung (218) einer Düse (102, 402, 602), um aufeinanderfolgende Schichten eines Objekts (116, 403) zu bilden,
wobei das Ausstoßen jedes Tropfens (112', 304, 401, 601) das Anlegen eines ersten Stromimpulses an das flüssige Metall in der Düse (102, 402, 602) aufweist, der ausreicht, um den Tropfen (112', 304, 401, 601) auszustoßen, **gekennzeichnet durch**:
Anlegen eines zweiten Stromimpulses an das flüssige Metall in der Düse (102, 402, 602), wodurch eine Amplitude einer Schwingung im Meniskus (301) verringert wird.

2. Verfahren gemäß Anspruch 1, wobei der erste Stromimpuls und der zweite Stromimpuls entgegengesetzte Polaritäten aufweisen.

3. Verfahren gemäß Anspruch 1, wobei der erste Stromimpuls und der zweite Stromimpuls die gleiche Polarität aufweisen.

## Revendications

1. Procédé de fabrication additive de pièces métalliques par impression magnétohydrodynamique (MHD) de métal liquide, comprenant les étapes suivantes :
l'éjection d'une pluralité de gouttelettes de métal liquide à partir de l'orifice de décharge (218) d'une buse (102, 402, 602) afin de former des couches successives d'un objet (116, 403),
l'éjection de chaque gouttelette (112', 304, 401, 601) comprend l'application d'une première impulsion de courant au métal liquide dans la buse (102, 402, 602) suffisante pour éjecter la gouttelette (112', 304, 401, 601), **caractérisée par** :
l'application d'une deuxième impulsion de courant au métal liquide dans la buse (102, 402, 602), réduisant ainsi une amplitude d'une oscillation dans le ménisque (301).

2. Procédé selon la revendication 1, dans lequel la première impulsion de courant et la deuxième impulsion de courant sont de polarités opposées.

3. Procédé selon la revendication 1, dans lequel la première impulsion de courant et la deuxième impulsion de courant sont de même polarité.
